(19) **Europäisches Patentamt / European Patent Office / Office européen des brevets**

(11) **EP 2 750 848 B1**

(12) # FASCICULE DE BREVET EUROPEEN

(45) Date de publication et mention de la délivrance du brevet:
**18.05.2016 Bulletin 2016/20**

(21) Numéro de dépôt: **12795494.9**

(22) Date de dépôt: **18.10.2012**

(51) Int Cl.:
*H05B 6/10* *(2006.01)*    *B29C 33/06* *(2006.01)*
*B29D 30/06* *(2006.01)*    *B29C 35/08* *(2006.01)*

(86) Numéro de dépôt international:
**PCT/FR2012/052371**

(87) Numéro de publication internationale:
**WO 2013/060968 (02.05.2013 Gazette 2013/18)**

(54) **PRESSE DE VULCANISATION DE PNEUMATIQUE COMPRENANT DES MOYENS DE CHAUFFAGE PAR INDUCTION ET PROCÉDÉ DE FABRICATION D'UN PNEUMATIQUE**

REIFENVULKANISIERPRESSE MIT INDUKTIONSHEIZUNG UND VERFAHREN ZUR HERSTELLUNG EINES LUFTREIFENS

TYRE VULCANISING PRESS COMPRISING INDUCTION HEATING MEANS AND METHOD FOR MANUFACTURING A PNEUMATIC TIRE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.10.2011 FR 1159835**

(43) Date de publication de la demande:
**09.07.2014 Bulletin 2014/28**

(73) Titulaires:
- **Compagnie Générale des Etablissements Michelin**
  **63000 Clermont-Ferrand (FR)**
- **Michelin Recherche et Technique S.A.**
  **1763 Granges-Paccot (CH)**

(72) Inventeurs:
- **ROCHETTE, Alain**
  **63040 Clermond-Ferrand Cedex 9 (FR)**

- **VALENTIN, Didier**
  **63040 Clermond-Ferrand Cedex 9 (FR)**

(74) Mandataire: **Noel, Luminita**
**M. F. P. MICHELIN**
**23 place des Carmes-Déchaux**
**SGD/LG/PI - F35 - Ladoux**
**63040 Clermont-Ferrand Cedex 9 (FR)**

(56) Documents cités:
| | |
|---|---|
| EP-A1- 1 440 781 | EP-A2- 0 749 267 |
| WO-A2-98/41061 | JP-A- 2001 001 342 |
| JP-A- 2001 205 636 | JP-A- 2003 112 320 |
| SU-A1- 852 618 | US-A- 1 566 500 |
| US-A- 1 791 934 | US-A- 4 599 061 |
| US-A1- 2005 133 149 | |

EP 2 750 848 B1

**Description**

L'invention concerne les presses de cuisson des pneumatiques.

Pour la fabrication d'un pneumatique de roue de véhicule, on réalise une ébauche comprenant de la gomme crue ainsi que différentes constituants tels que des éléments de renfort. Une fois l'ébauche achevée, on la cuit dans une presse de façon à réaliser la vulcanisation de la gomme. L'ébauche est reçue dans un moule de la presse qui, au cours de la cuisson, donne sa forme définitive au pneumatique.

Il est connu de chauffer le moule au moyen d'un fluide caloporteur tel que de la vapeur d'eau sous pression. Ce mode de chauffage permet d'obtenir une répartition homogène de la température dans le moule. Toutefois, il nécessite d'amener jusqu'au moule le fluide à haute température et présente donc un mauvais rendement énergétique.

Il est également connu de chauffer le moule par induction magnétique. La chaleur étant produite cette fois directement dans le moule, le rendement énergétique est meilleur. La chaleur peut être procurée au moule par des inducteurs dont les pieds sont en appui contre la face latérale circonférentielle du moule.

Par ailleurs, au sein d'une même installation de fabrication, on est amené à cuire des ébauches destinées à former des modèles de pneumatiques différents et dont les moules présentent donc des diamètres différents. Pour garantir un bon contact entre chaque inducteur et la paroi du moule et ainsi obtenir un bon couplage électromagnétique, les moules de diamètres différents les uns des autres sont chauffés par des jeux respectifs d'inducteurs différents les uns des autres.

Or cela est coûteux car cela nécessite de disposer de nombreux jeux d'inducteurs. Et ces très nombreuses inducteurs requièrent un important volume pour leur stockage et engendrent du travail pour la gestion de leur utilisation.

Le document US 4 599 061 A et le document JP 2001 001342 A divulguent des presses de cuisson d'ébauche de pneumatiques munies d'inducteurs.

Un but de l'invention est de réduire les coûts et le travail engendré par la cuisson des ébauches de pneumatique par induction.

A cet effet, on prévoit selon l'invention une presse de cuisson d'ébauche de pneumatique, qui comprend :

- un moule, et
- des inducteurs aptes à chauffer la presse par induction électromagnétique, chaque inducteur comprenant un noyau comportant deux pieds présentant des semelles respectives planes et inclinées l'une par rapport à l'autre.

Ainsi, cette configuration des semelles rend possible d'utiliser les inducteurs pour chauffer des moules de différents diamètres. En effet, elle permet un bon contact entre les semelles et la paroi du moule, donc un bon couplage électromagnétique, pour différents diamètres de ce dernier. On peut alors utiliser le même jeu d'inducteurs pour chauffer des moules de différents diamètres, ce qui réduit le stock des inducteurs nécessaires et facilite leur gestion.

Avantageusement, les inducteurs forment au moins une succession suivant une direction circonférentielle à un axe du moule et l'inclinaison forme un angle α tel que

$$α=180°-180°/N$$

où N désigne le nombre d'inducteurs de la succession.

Cette valeur permet de rendre égales la longueur de l'arc séparant les deux points de contact de chaque noyau avec la paroi et la longueur de l'arc séparant les deux points de contact de deux noyaux successifs avec la paroi. On obtient ainsi une meilleure homogénéité du champ magnétique dans la paroi et donc un chauffage plus homogène du moule. De plus, cette propriété est conservée pour une grande gamme de diamètres du moule. On peut prévoir que les inducteurs forment au moins une succession suivant une direction circonférentielle à un axe du moule et que la presse comprend un circuit d'alimentation en courant de bobines des inducteurs de la succession tel que, à un même instant quelconque donné, chaque bobine présente un pôle nord qui suit un pôle sud d'une bobine immédiatement précédente dans la succession.

Ainsi, les flux magnétiques secondaires des bobines successives se cumulent dans la presse, ce qui donne une répartition homogène de la température dans le moule.

La presse selon l'invention pourra présenter en outre au moins l'une quelconque des caractéristiques suivantes :

- la presse comprend au moins deux ensembles de bobines, les bobines de l'un des ensembles se trouvant respectivement au-dessus des bobines de l'autre ensemble, le circuit d'alimentation étant tel que, à un même instant quelconque donné, les pôles nord des bobines des ensembles sont les uns au-dessus des autres ;
- la presse comprend au moins deux ensembles de bobines, les bobines d'un premier des ensembles se trouvant respectivement au-dessus des bobines d'un deuxième des ensembles, le circuit d'alimentation étant tel que, à un même instant quelconque donné, les pôles nord des bobines du premier ensemble sont au-dessus des pôles sud des bobines du deuxième ensemble ; et
- les bobines de la succession forment deux sous-ensembles disjoints alimentés en courant suivant un montage électrique en parallèle, les bobines appartenant par exemple alternativement aux premier et deuxième sous-ensembles lorsqu'on parcourt la succession suivant la direction circonférentielle.

Avantageusement, la presse comprend un anneau de frettage des secteurs, ininterrompu en direction circonférentielle autour d'un axe du moule et formant une face externe de la presse.

Un tel anneau assure un couplage électromagnétique particulièrement bon avec les inducteurs en raison de sa continuité. En effet, les lignes de flux de chaque inducteur peuvent s'étendre tout autour de l'axe dans l'anneau. On augmente donc le rendement du chauffage.

Dans un mode de réalisation, le moule est un moule auto-bloquant.

On prévoit également selon l'invention un procédé de fabrication d'un pneumatique dans lequel on cuit une ébauche de pneumatique dans une presse selon l'invention.

De préférence, on alimente les bobines avec un courant présentant une fréquence comprise entre 5 et 200 Hz.

Cette gamme de fréquences permet de faire pénétrer le flux magnétique des bobines plus en profondeur dans la presse.

D'autres caractéristiques et avantages de l'invention apparaîtront encore dans la description suivante de plusieurs presses et de plusieurs modes de réalisation donnés à titre d'exemples non limitatifs en référence aux dessins annexés sur lesquels :

- les figures 1 et 2 sont des vues respectivement en section verticale et en perspective d'une presse selon l'invention ;
- les figures 3 à 6 sont des vues en section verticale et en plan d'une presse illustrant le principe de l'induction magnétique ;
- les figures 7 et 8 sont des vues de côté et en plan d'une presse selon un mode de réalisation de l'invention, la figure 9 montrant le schéma électrique des bobines ;
- les figures 10 et 11 sont des vues analogues à la figure 7 montrant d'autres modes de réalisation ;
- les figures 12 et 13 sont des vues en plan du noyau de l'un des inducteurs et d'une partie de la presse dans un mode de réalisation de l'invention ;
- les figures 14 et 15 sont des vues en perspective et en plan d'une presse selon un mode de réalisation de l'invention;
- la figure 16 est une vue plus grande échelle d'un détail D de la presse de la figure 15 ;
- les figures 17 et 18 sont des vues analogues aux figures 15 et 16 montrant une variante de réalisation de la presse de la figure 14; et
- la figure 19 est une vue analogue à la figure 16 en montrant une autre variante de réalisation.

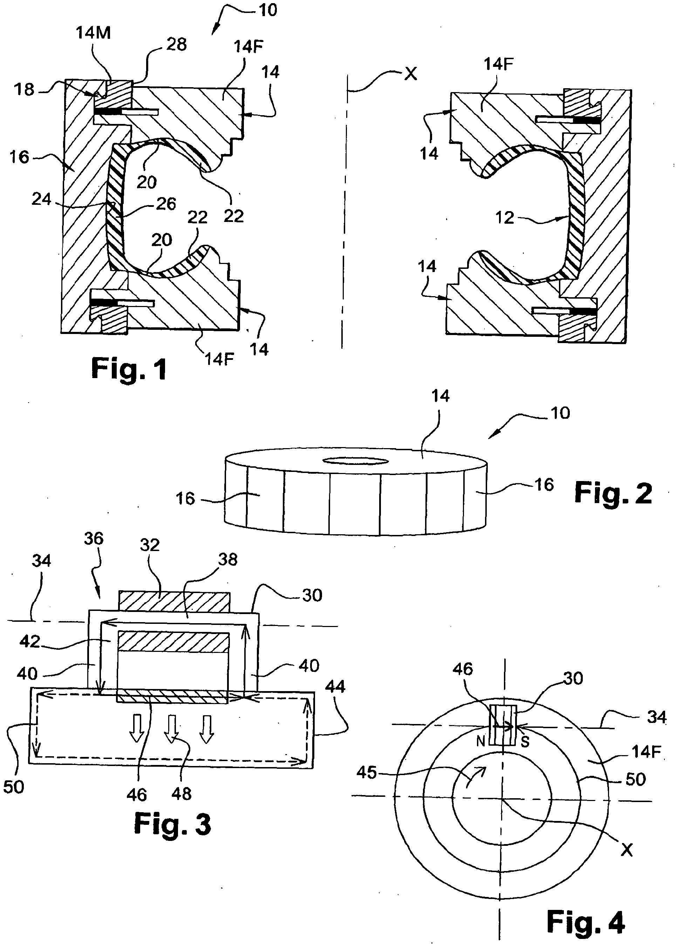

On a illustré aux figures 1 et 2 une presse 10 formant un moule de cuisson pour une ébauche de pneumatique 12. Il s'agit d'un pneumatique de véhicule. Le véhicule est par exemple un véhicule de tourisme, un véhicule utilitaire ou un véhicule de type poids lourd. Il peut aussi s'agir d'un pneumatique de roue d'engin de génie civil.

La presse 10 a une forme générale à symétrie de révolution autour d'un axe vertical X coïncidant avec l'axe de révolution du pneumatique 12 ou de l'ébauche lorsque le pneumatique est logé dans le moule comme illustré à la figure 1.

La presse comprend un moule qui comporte des premier et second organes axiaux respectivement supérieur et inférieur 14, des segments ou secteurs radiaux latéraux 16 ainsi que des moyens 18 de liaison de chaque organe axial 14 avec les segments radiaux 16. Chaque organe axial 14 a une forme générale de disque et présente une surface interne 20 pour le moulage d'un plan correspondant 22 du pneumatique. Chaque organe 14 comprend ici une partie centrale principale, appelée coquille, et une partie 14M montée mobile axialement par rapport à la partie centrale 14F. Les segments radiaux 16 portent chacun une portion d'une surface de révolution annulaire 24 pour le moulage d'une bande de roulement 26 du pneumatique.

Il s'agit en l'espèce d'un moule autobloquant mais l'invention n'est pas limitée à ce type de moule. Pour plus de détails sur cet exemple de réalisation du moule, on pourra se reporter à la demande FR-2 908 069.

Les coquilles 14F sont montées mobiles à coulissement l'une par rapport à l'autre et par rapport à un bâti de la presse suivant la direction de l'axe X. Les segments ou secteurs 16 sont montés mobiles à coulissement les uns par rapport aux autres et par rapport au bâti chacun suivant une direction horizontale radiale à l'axe X. Les moyens de montage assurant ces mobilités sont connus et ne sont pas détaillés ici.

La presse est destinée à recevoir une ébauche de pneumatique formée en grande partie de gomme crue. L'ébauche comprend également des éléments de renfort, par exemple, métalliques, textiles, etc.

Dans le moule, on réalise la cuisson de l'ébauche pour la vulcanisation de la gomme et en même temps sa mise en forme pour l'obtention du pneumatique. Ces opérations sont effectuées par apport de chaleur au moule. Cet apport est réalisé par induction magnétique grâce aux moyens que nous allons décrire ci-après.

Ces moyens sont alimentés en courant électrique par le réseau de distribution qui fournit un courant alternatif dont la tension est comprise par exemple entre 400 et 460 volts et la fréquence entre 50 et 60 hertz, ces valeurs n'étant pas limitatives et étant variables selon les pays. Chacune des presses qui vont être décrites comprend des inducteurs 30 tels que celui illustré aux figures 3 et 4. Chaque inducteur 30 comprend une bobine 32 alimentée en courant électrique. La bobine est formée par un fil conducteur du courant électrique enroulé autour d'un axe rectiligne 34 de façon à donner à la bobine une forme générale de cylindre.

Chaque inducteur 30 comporte également un noyau 36 en matériau ferromagnétique comprenant une partie centrale 38 de forme cylindrique d'axe 34 à section circulaire dans un plan perpendiculaire à cet axe. Le noyau comprend en outre deux pieds 40 disposés pour donner au noyau, avec la partie centrale 38, une forme générale de « U », les deux pieds 40 étant parallèles l'un à l'autre. Le noyau est formé en tôle feuilletée pour limiter l'apparition de courants de Foucault en son sein. Nous décrirons plus loin en détail la forme du noyau.

Lorsque la bobine 32 est alimentée en courant, elle génère un champ magnétique 42 en circuit fermé qui parcourt le noyau depuis l'extrémité d'un des pieds jusqu'à l'extrémité de l'autre et se referme en parcourant la partie 44 du moule ou de la presse destinée à être chauffée et contre laquelle est disposé l'inducteur.

C'est ainsi qu'une partie principale 46 du champ magnétique parcourt la pièce suivant le plus court chemin entre les deux pieds et y génère des courants de Foucault qui engendrent par effet Joule une production de chaleur. La chaleur se diffuse ensuite par conduction thermique dans la pièce notamment dans la direction indiquée par les flèches 48. La loi de pénétration du champ magnétique dépend des caractéristiques électriques et magnétiques du matériau de la partie 44 ainsi que de l'état de saturation. Notamment la pénétration du champ magnétique augmente lorsque la fréquence du courant diminue. En l'espèce, il s'agit d'un courant à basse fréquence.

Le champ magnétique 42 qui se referme dans la pièce 44 ne le fait pas seulement suivant le trajet court du champ principal 46. Il comprend aussi un champ secondaire 50 qui parcourt par exemple la périphérie de la pièce à proximité de sa surface. Notamment, le champ 50 sort du noyau par l'un des pieds en suivant d'abord la pièce 44 en direction opposée à l'autre pied et parcourt la pièce près de sa surface suivant un trajet long.

Dans chaque presse, des inducteurs 30 sont fixés à la presse de façon à chauffer le moule de cuisson. On peut ainsi prévoir un ensemble d'inducteurs pour chauffer la coquille supérieure 14F, un ensemble d'inducteurs pour chauffer la coquille inférieure 14F et un autre pour chauffer les secteurs 16. Toutes les parties de la presse destinées à être chauffées par induction sont formées en matériau ferromagnétique. Il peut s'agir des parties du moule lui-même ou bien d'éléments de la presse en contact avec ces dernières.

Comme on va le voir, il est possible de disposer les inducteurs de différentes façons pour utiliser au mieux leur flux et en particulier les flux secondaires entre les inducteurs.

Nous allons tout d'abord décrire le chauffage de la coquille supérieure 14F. Il va de soi que des dispositions analogues sont applicables pour le chauffage de la coquille inférieure.

A la figure 4, on dispose l'inducteur 30 au-dessus de la coquille 14F et en contact avec sa face supérieure horizontale annulaire par les semelles des pieds 40. L'axe 34 est dans une direction orthogonale à l'axe X, cette direction étant tangente à la direction 45 circonférentielle à l'axe X. L'inducteur étant alimenté en courant alternatif, à tout instant, il présente des pôles nord et sud éloignés l'une de l'autre sur l'axe 34, le champ magnétique s'étendant de l'un à l'autre. Dans la coquille 14F, le champ principal 46 s'étend donc au droit de l'inducteur 30, suivant la direction circonférentielle, de gauche à droite sur la figure 4 à l'instant considéré. On rappelle en effet que, le courant étant alternatif, le champ magnétique change de polarité de nombreuses fois par seconde. Le champ secondaire 50 s'étend lui aussi du nord au sud mais parcourt la coquille 14F en direction circonférentielle en faisant le tour de l'axe X dans le sens opposé à celui du champ principal 46. En effet, le champ secondaire peut s'établir librement dans la zone de la pièce la plus éloignée des pôles de l'inducteur puisque la couronne 14F a une forme annulaire et constitue une pièce massive d'un seul tenant et sans entrefer perturbateur.

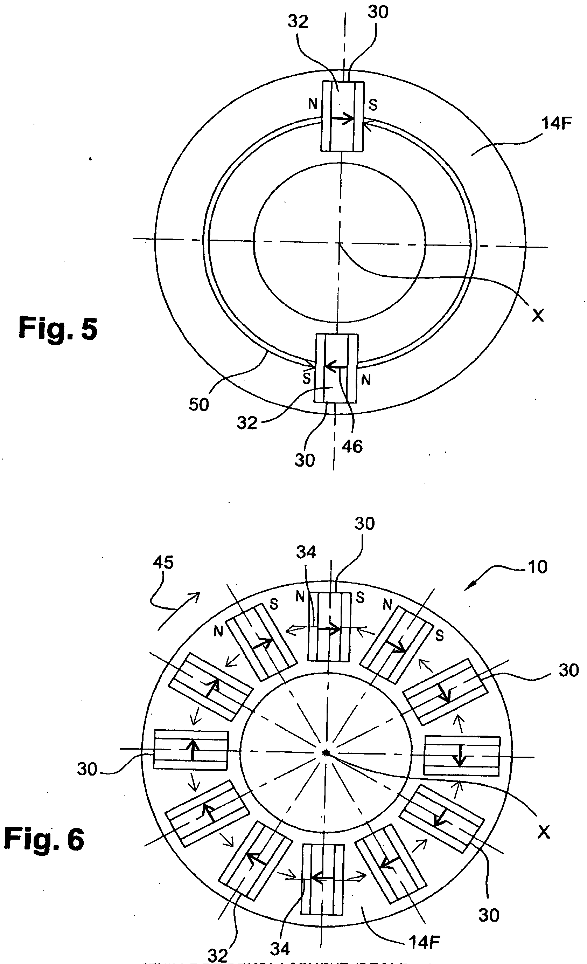

On a illustré à la figure 5 une situation analogue dans laquelle on a ajouté un inducteur 30 connecté en série avec le premier pour son alimentation électrique et occupant sur la couronne une position symétrique de celle du premier par rapport à l'axe X. Les deux inducteurs sont connectés de sorte que leurs pôles nord et sud, à un même instant donné, sont également symétriques par rapport à l'axe X. Cet inducteur génère lui-aussi un champ principal 46 et un champ secondaire 50. Au sein de la coquille, dans la plus grande zone qui n'est pas située au droit des inducteurs, les deux champs secondaires 50 sont, à un instant donné, orientés dans le même sens et s'additionnent. Au même instant, le champ secondaire 50 généré par chaque inducteur vient diminuer légèrement le champ principal 46 généré par l'autre, ces deux champs étant en sens contraire.

En référence à la figure 6, selon ce principe, dans cette presse 10, la coquille est dotée de plusieurs paires d'inducteurs, par exemple quatorze inducteurs identiques 30 répartis en sept paires de deux inducteurs, les inducteurs de chaque paire étant diamétralement opposés l'un à l'autre par rapport à l'axe X comme sur la figure 5. Les inducteurs sont disposés tout autour de l'axe X en étant régulièrement répartis et s'étendent tous à la même distance de l'axe X. Chaque inducteur est donc l'image du précédent dans la succession par une rotation d'axe X. Les inducteurs sont disposés en succession suivant la direction 45 circonférentielle à l'axe X. L'axe X de chaque bobine est tangent à la direction circonférentielle et n'est pas dirigé vers le moule. Les inducteurs sont connectés de sorte que, à un même instant quelconque donné, chaque bobine a son pôle nord qui succède au pôle sud de la bobine immédiatement suivante dans la succession. Les pôles sont donc disposés suivant une succession du type NSNS.

Dans la coquille, les flux secondaires 50 de tous les inducteurs s'additionnent les uns aux autres puisqu'ils sont à un même instant tous orientés dans le même sens.

Le flux principal de chaque inducteur se trouve en revanche diminué par les flux secondaires générés par tous les autres inducteurs. Cet agencement des inducteurs permet de répartir les flux magnétiques dans la coquille de façon à chauffer les portions de cette dernière se trouvant au droit des inducteurs mais également ses portions se trouvant au droit des espaces entre ceux-ci. On obtient une zone de chauffage continue et homogène dans la coquille tout autour de l'axe.

En l'espèce, on choisit la cote de l'entrefer de chaque inducteur, c'est-à-dire la distance séparant ses pôles nord et sud, pour qu'elle soit égale à la distance séparant l'un de l'autre les inducteurs successifs dans la succession. Ces distances sont mesurées au niveau de l'axe 34 des inducteurs. De la sorte, les flux magnétiques générés dans la coquille sont équilibrés et le chauffage de cette dernière est continu et particulièrement homogène.

## Premier mode de réalisation

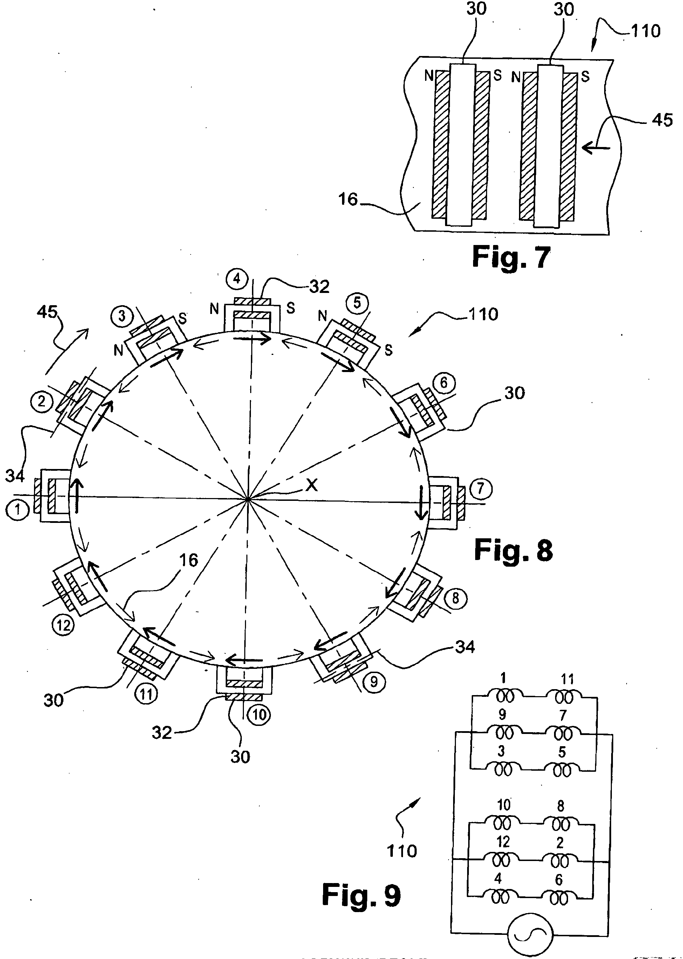

Un mode de réalisation de la presse 110 selon l'invention est illustré en référence aux figures 7 à 9. Les inducteurs 30 ont une forme similaire à celle présentée plus haut en référence à la figure 3. Mais ils sont cette fois disposés autour du moule en périphérie de ce dernier afin de produire de la chaleur dans les secteurs 16 ou dans une pièce en contact avec ces derniers. Chaque inducteur 30 est disposé de sorte que les semelles des pieds 40 sont en contact avec la face externe périphérique cylindrique définie par les secteurs 16. Il s'agit d'une face qui sera décrite plus loin en détail. De plus, les inducteurs sont orientés de sorte que l'axe 34 est horizontal et tangent à la direction 45 circonférentielle à l'axe X. Les inducteurs sont identiques entre eux et s'étendent tous à la même hauteur en étant régulièrement répartis autour de l'axe X. Chaque inducteur est donc l'image du précédent dans la succession par une rotation autour de l'axe X. L'orientation des pôles des inducteurs est similaire à celle présentée à l'appui de la figure 6. Ainsi, le circuit d'alimentation est agencé de sorte que, à un même instant quelconque donné, chaque bobine a son pôle nord qui succède au pôle sud de la bobine immédiatement suivante dans la succession. On se trouve encore en présence d'une succession de pôles de type NSNS.

Les inducteurs sont disposés en une seule rangée, c'est-à-dire sur un seul niveau comme illustré à la figure 7. Compte tenu de l'orientation des polarités, les champs secondaires s'additionnent dans les portions des secteurs 16 situées au droit des espaces entre les inducteurs. Dans les portions des secteurs situées au droit des inducteurs, le champ principal est diminué des champs secondaires générés par tous les autres inducteurs. Les flux dans les secteurs sont donc équilibrés et on obtient un chauffage continu et relativement homogène de la périphérie du moule. Comme précédemment, on prévoit que la cote de l'entrefer de chaque inducteur est égale à la cote entre les inducteurs immédiatement successifs pour améliorer cette homogénéité.

L'invention est applicable que les secteurs 16 soient séparés et indépendants les uns des autres ou bien qu'ils soient rigidement fixés les uns aux autres au moins pour une partie d'entre eux.

Le schéma d'alimentation électrique des inducteurs qui ont été numérotés de 1 à 12 dans la succession en suivant la circonférence, a été illustré à la figure 9. Les inducteurs sont répartis en deux sous-ensembles disjoints de six inducteurs chacun et comprenant respectivement les inducteurs numérotés pairs et impairs. Dans chaque sous-ensemble, les six inducteurs sont répartis en trois paires disjointes. Les inducteurs de chaque paire ne sont pas adjacents dans la succession. C'est ainsi que les paires sont formées par les inducteurs 1 et 11, 9 et 7 et 3 et 5 dans le premier sous-ensemble tandis qu'il s'agit des paires 10 et 8, 12 et 2 et 4 et 6 dans le deuxième sous-ensemble. Les inducteurs de chaque paire sont montés en série pour former une branche, les trois branches étant connectées en parallèles les unes aux autres.

## Deuxième mode de réalisation

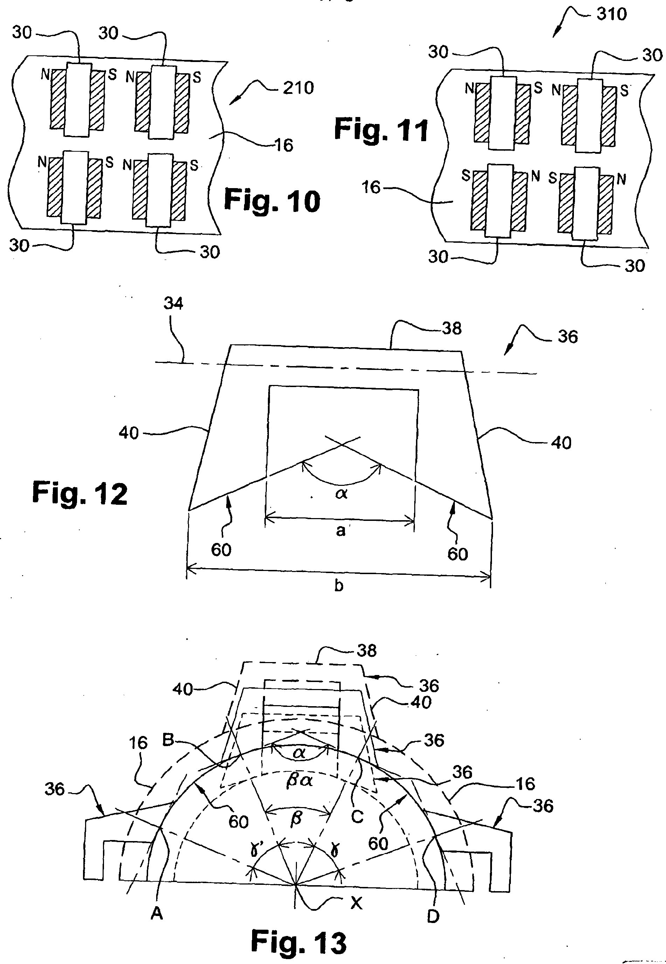

Un autre mode de réalisation est illustré à la figure 10. La presse 210 diffère de la précédente uniquement par le fait que les inducteurs 30 destinés à générer de la chaleur dans les secteurs 16 sont prévus non pas sur un mais sur deux niveaux. On compte donc cette fois deux ensembles de douze inducteurs 30 chacun formant deux successions respectives. Dans chaque ensemble, les inducteurs sont disposés de la même façon que sur la figure 8. Les inducteurs des deux ensembles sont en coïncidence deux à deux en étant situés l'un au-dessus de l'autre. Les inducteurs sont identiques dans les deux ensembles. On se trouve en présence de deux successions de pôles de type NSNS.

Les bobines de l'ensemble supérieur se trouvent respectivement au-dessus des bobines de l'ensemble inférieur c'est-à-dire au droit de celles-ci ou encore en coïncidence avec elles. Le circuit d'alimentation est tel que, à un même instant quelconque donné, dans chaque succession, chaque bobine présente un pôle nord qui suit un pôle sud d'une bobine immédiatement précédente dans la succession, et les pôles nord des bobines de l'ensemble supérieur sont au-dessus des pôles nord des bobines de l'ensemble inférieur. Les pôles de l'ensemble supérieur se succèdent donc dans le même sens que ceux de l'ensemble inférieur autour de la circonférence.

## Troisième mode de réalisation

Dans ce mode illustré à la figure 11, la presse 310 est identique à la précédente à ceci près que le circuit d'alimentation est tel que, à un même instant quelconque donné, les pôles nord des bobines de l'ensemble supérieur sont au-dessus des pôles sud des bobines de l'ensemble inférieur. Les pôles de l'ensemble supérieur et ceux de l'ensemble inférieur se succèdent donc cette fois en sens contraires autour de la circonférence.

Réalisation des inducteurs

Nous allons présenter en référence aux figures 12 et 13 un mode de réalisation des inducteurs des presses présentées en référence aux figures 7 à 11.

On a vu, à l'appui de la figure 8, que l'égalité entre la cote de l'entrefer de chaque inducteur et la distance séparant deux inducteurs successifs permettait d'obtenir une bonne homogénéité dans la répartition des flux magnétiques. Or, il est courant d'utiliser dans une même presse des moules de dimensions différentes et en particulier de diamètres externes différents les uns des autres en fonction du modèle de pneumatique à réaliser. Le présent mode de réalisation permet d'utiliser les mêmes inducteurs dans la même configuration générale tout en respectant cette égalité afin d'adapter la presse à des moules de différents diamètres externes.

Les pieds 40 du noyau 36 présentent des semelles planes 60 inclinées l'une par rapport à l'autre pour former un angle α. Chaque semelle 60 demeure parallèle à l'axe X. On désigne par N le nombre (pair) d'inducteurs de l'ensemble disposés en succession le long de la circonférence. On choisit l'angle α de sorte que :

$$\alpha = 180°\text{-}180°/N.$$

On a illustré à la figure 13 en traits pointillés le contact de l'inducteur supérieur 30 avec la face externe du moule dans les configurations de moule respectivement de diamètre minimal et de diamètre maximal. On a également illustré en traits pleins le contact du noyau avec un moule de diamètre intermédiaire.

On désigne par B et C les points de contact des semelles respectives 60 du noyau situé en haut de la figure 13 avec la périphérie du moule. La périphérie étant cylindrique à section circulaire et les semelles étant planes, ce contact s'effectue au niveau de chaque semelle suivant une ligne verticale, ce qui correspond à un point dans le plan de section horizontale de la figure 13. On désigne pareillement par A le point de contact de la semelle de l'inducteur précédent la plus proche dans la succession et par D le point de contact de la semelle de l'inducteur suivant la plus proche dans la succession. Pour la simplification de l'illustration, on a limité sur la figure 13 à quatre le nombre d'inducteurs mais le raisonnement reste valable quel que soit le nombre (pair) N d'inducteurs. On définit un angle β ayant son sommet sur l'axe X et formé par les points de contact B et C, et un angle γ ayant pour sommet l'axe X et passant par les points A et B

L'angle α précité permet de faire en sorte que l'angle β reste inchangé quel que soit le diamètre du moule. Autrement dit, le point B se déplace sur une droite passant par l'axe X lorsque le diamètre varie. Il en est de même pour le point C. Il suffit ensuite de choisir en fonction du diamètre minimal du moule la cote *a* qui désigne la plus courte distance entre les deux semelles 60, et de choisir en fonction du diamètre maximal du moule la cote *b* qui désigne la plus grande distance entre les deux semelles. On peut dès lors choisir les cotes *a* et b de sorte que l'angle y séparant les points de contact des inducteurs successifs soit égal à l'angle β séparant les points de contact du même inducteur. Par conséquent, en désignant par AB et BC respectivement la distance entre les inducteurs successifs et l'entrefer de chaque inducteur, on obtient la propriété d'égalité entre ces valeurs et ce, quel que soit le diamètre choisi pour le moule et en utilisant les mêmes inducteurs.

La légère différence entre chaque flux principal et la somme des flux secondaires dans les espaces entre les inducteurs est compensée par la diffusivité du matériau constituant la périphérie du moule et la masse de ce dernier.

Quatrième mode de réalisation

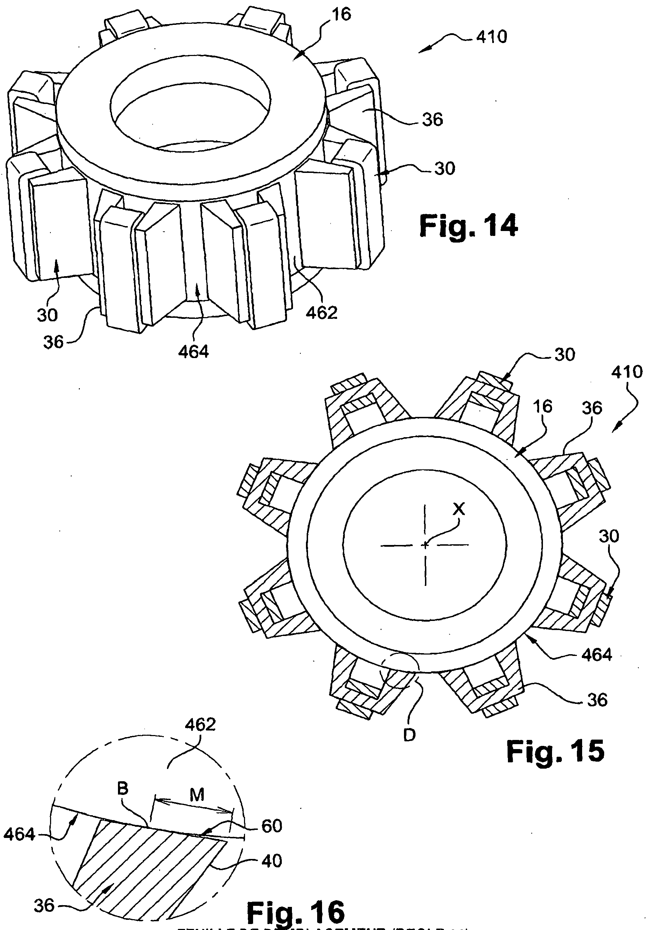

Un autre mode de réalisation de la presse selon l'invention a été illustré aux figures 14 à 16. La presse 410 est globalement identique à la presse décrite plus haut en référence aux figures 7 et 8 et comprend donc elle aussi des inducteurs du type de celui décrit en référence aux figures 12 et 13. Ces inducteurs sont en l'espèce au nombre de huit. La presse se distingue de celle des figures 7 et 8 par le fait qu'elle comprend un anneau de frettage des secteurs ou bague de frettage 462 formant une partie de la paroi latérale du moule et une partie de sa face externe circonférentielle latérale. L'anneau de frettage présente une face externe cylindrique à section circulaire dans un plan horizontal perpendiculaire à l'axe du moule. Il présente aussi une face interne de forme tronconique Ces deux faces sont coaxiales à l'axe X. L'anneau a donc une forme générale annulaire. L'anneau de frettage est continu et ininterrompu en direction circonférentielle autour de l'axe X. Il offre donc une forme particulièrement propice à la fermeture du champ magnétique secondaire de chaque bobine et améliore ainsi le couplage électromagnétique.

La face interne tronconique de l'anneau de frettage est agencée pour coopérer par effet de coin avec une face externe également tronconique des secteurs latéraux du moule afin que le coulissement de l'anneau par rapport à ces secteurs suivant la direction de l'axe X provoque le coulissement de chacun de ceux-ci en direction radiale pour la fermeture du moule. Il s'agit donc d'une technologie alternative à celle du moule autobloquant présenté plus haut.

Les semelles des inducteurs sont réalisées conformément à ce qui a été décrit en référence aux figures 12 et 13. Dans le plan de section de la figure 16, on a notamment illustré le point de contact B entre la semelle et la face 464.

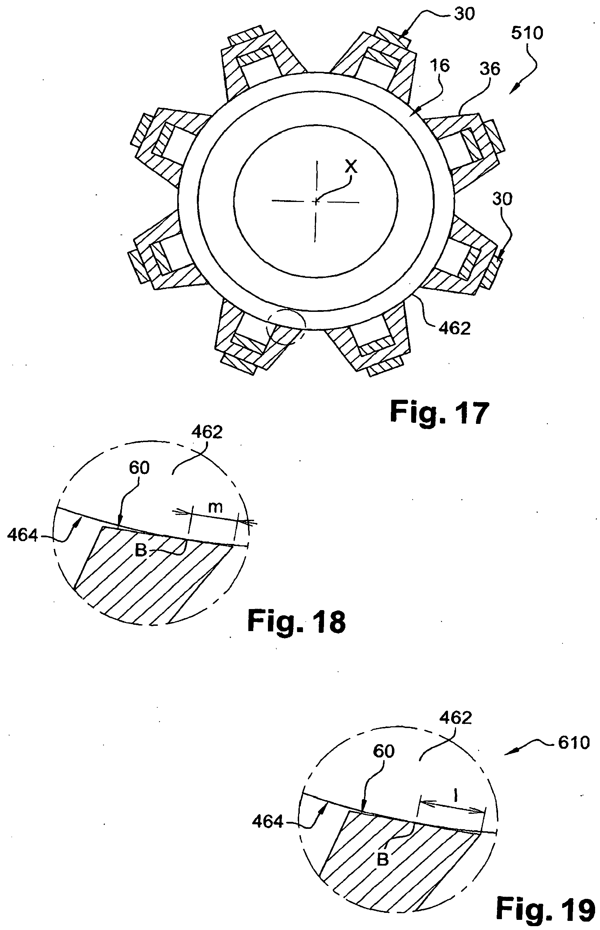

On a illustré aux figures 17 et 18 une presse 510 comprenant un moule similaire qui diffère du précédent uniquement parce qu'il présente un plus grand diamètre. Cette presse en revanche comprend les mêmes inducteurs 30 que la précédente.

De même, on a illustré à la figure 19 une vue d'une presse 610 analogue aux figures 16 et 18 dans laquelle le diamètre de l'anneau de frettage est intermédiaire entre ceux des presses 410 et 510, l'inducteur 30 étant une fois de plus inchangé.

Ce sont donc les mêmes inducteurs qui sont utilisés dans ces trois presses, ce qui illustre le fait que les mêmes inducteurs peuvent être utilisés pour chauffer des moules de diamètres différents.

Sur les trois figures 16, 18 et 19, on a désigné respectivement par M, m et I la distance du point B au bord externe de la semelle. On observe donc que cette distance décroît à mesure qu'augmente le diamètre du moule et de la presse c'est-à-dire celui de l'anneau 464.

Nous faisons ici remarquer que les inducteurs qui ont été présentés ne servent pas en général à chauffer le moule pendant toute la durée de la vulcanisation de la gomme du pneumatique. En effet, il est préférable de les utiliser pour fournir une quantité de chaleur initiale puis de stopper le fonctionnement des inducteurs, la chaleur ainsi produite étant ensuite diffusée et servant par inertie pour toute la phase de vulcanisation.

L'invention est applicable à des fréquences de courant situées entre 5 et 200 hertz. Elle est notamment applicable pour une induction à haute fréquence.

Bien entendu, on pourra apporter à l'invention de nombreuses modifications sans sortir du cadre de celle-ci.

## Revendications

**1.** Presse (110-610) de cuisson d'ébauche de pneumatique, **caractérisée en ce qu'**elle comprend :

- un moule (14, 16), et
- des inducteurs (30) aptes à chauffer la presse par induction électromagnétique, chaque inducteur comprenant un noyau (36) comportant deux pieds (40) présentant des semelles respectives (60) planes et inclinées l'une par rapport à l'autre.

**2.** Presse (110-610) selon la revendication précédente dans laquelle les inducteurs ferment au moins une succession suivant une direction circonférentielle (45) à un axe (X) du moule et l'inclinaison forme un angle $\alpha$ tel que

$$0=180°-180°/N$$

où N désigne le nombre d'inducteurs (30) de la succession.

**3.** Presse (110-610) selon au moins l'une quelconque des revendications précédentes dans laquelle les inducteurs forment au moins une succession suivant une direction circonférentielle (45) à un axe (X) du moule et la presse comprend un circuit d'alimentation en courant de bobines des inducteurs de la succession tel que, à un même instant quelconque donné, chaque bobine (32) présente un pôle nord qui suit un pôle sud d'une bobine immédiatement précédente dans la succession.

**4.** Presse (210) selon la revendication précédente qui comprend au moins deux ensembles de bobines (32), les bobines de l'un des ensembles se trouvant respectivement au-dessus des bobines de l'autre ensemble, le circuit d'alimentation étant tel que, à un même instant quelconque donné, les pôles nord des bobines des ensembles sont les uns au-dessus des autres.

**5.** Presse (310) selon la revendication 3 qui comprend au moins deux ensembles de bobines (32), les bobines d'un premier des ensembles se trouvant respectivement au-dessus des bobines d'un deuxième des ensembles, le circuit d'alimentation étant tel que, à un même instant quelconque donné, les pôles nord des bobines du premier ensemble sont au-dessus des pôles sud des bobines du deuxième ensemble.

**6.** Presse (110-610) selon au moins l'une quelconque des revendications 3 à 5, dans laquelle les bobines (32) de la succession ferment deux sous-ensembles disjoints alimentés en courant suivant un montage électrique en parallèle, les bobines appartenant par exemple alternativement aux premier et deuxième sous-ensembles lorsqu'on parcourt la succession suivant la direction circonférentielle.

**7.** Presse (410-610) selon au moins l'une quelconque des revendications précédentes qui comprend un anneau de frettage (462) ininterrompu en direction circonférentielle autour d'un axe du moule et formant une face externe de la presse.

**8.** Presse (110-310) selon au moins l'une quelconque des revendications précédentes dans laquelle le moule (14, 16) est un moule auto-bloquant.

**9.** Procédé de fabrication d'un pneumatique **caractérisé en ce qu'**on cuit une ébauche de pneumatique (12) dans une presse (110-610) selon au moins l'une quelconque des revendications 1 à 8.

**10.** Procédé selon la revendication précédente dans lequel on alimente des bobines (32) des inducteurs avec un courant présentant une fréquence comprise entre 5 et 200 Hz.

**Patentansprüche**

1. Presse (110-610) zum Vulkanisieren eines Reifenrohlings, **dadurch gekennzeichnet, dass** sie aufweist:

   - eine Form (14, 16), und
   - Induktoren (30), die geeignet sind, die Presse durch elektromagnetische Induktion zu heizen, wobei jeder Induktor einen Kern (36) aufweist, der mit zwei Füßen (40) versehen ist, die ebene und relativ zueinander geneigte jeweilige Sohlen (60) aufweisen.

2. Presse (110-610) nach dem vorhergehenden Anspruch, wobei die Induktoren wenigstens eine Reihe entlang einer Umfangsrichtung (45) um eine Achse (X) der Form bilden und die Neigung einen solchen Winkel α bildet, dass

$$\alpha = 180° - 180°/N$$

ist, wobei N die Anzahl der Induktoren (30) der Reihe bezeichnet.

3. Presse (110-610) nach einem der vorhergehenden Ansprüche, wobei die Induktoren wenigstens eine Reihe entlang einer Umfangsrichtung (45) um eine Achse (X) der Form bilden und die Presse einen solchen Speisestromkreis für die Spulen der Induktoren der Reihe aufweist, dass zu einem beliebigen gegebenen Zeitpunkt jede Spule (32) einen Nordpol aufweist, welcher auf einen Südpol einer in der Reihe unmittelbar vorangehenden Spule folgt.

4. Presse (210) nach dem vorhergehenden Anspruch, welche wenigstens zwei Sätze von Spulen (32) aufweist, wobei sich die Spulen des einen der Sätze jeweils über den Spulen des anderen Satzes befinden, wobei der Speisestromkreis so beschaffen ist, dass sich zu einem beliebigen gegebenen Zeitpunkt die Nordpole der Spulen der Sätze übereinander befinden.

5. Presse (310) nach Anspruch 3, welche wenigstens zwei Sätze von Spulen (32) aufweist, wobei sich die Spulen eines ersten der Sätze jeweils über den Spulen eines zweiten der Sätze befinden, wobei der Speisestromkreis so beschaffen ist, dass sich zu einem beliebigen gegebenen Zeitpunkt die Nordpole der Spulen des ersten Satzes über den Südpolen der Spulen des zweiten Satzes befinden.

6. Presse (110-610) nach wenigstens einem der Ansprüche 3 bis 5, wobei die Spulen (32) der Reihe zwei disjunkte Teilmengen bilden, die entsprechend einer elektrischen Parallelschaltung mit Strom versorgt werden, wobei die Spulen zum Beispiel abwechselnd der ersten und der zweiten Teilmenge angehören, wenn die Reihe in der Umfangsrichtung durchlaufen wird.

7. Presse (410-610) nach wenigstens einem der vorhergehenden Ansprüche, welche einen in Umfangsrichtung um eine Achse der Form herum ununterbrochenen und eine Außenseite der Presse bildenden Versteifungsring (462) aufweist.

8. Presse (110-310) nach wenigstens einem der vorhergehenden Ansprüche, wobei die Form (14, 16) eine selbstverriegelnde Form ist.

9. Verfahren zur Herstellung eines Reifens, **dadurch gekennzeichnet, dass** ein Reifenrohling (12) in einer Presse (110-610) nach wenigstens einem der Ansprüche 1 bis 8 vulkanisiert wird.

10. Verfahren nach dem vorhergehenden Anspruch, wobei Spulen (32) der Induktoren mit einem Strom gespeist werden, der eine Frequenz zwischen 5 und 200 Hz aufweist.

**Claims**

1. Curing press (110-610) for a tyre blank, **characterized in that** it comprises:

   - a mould (14, 16) and
   - inductors (30) capable of heating the press by electromagnetic induction, each inductor comprising a core (36) comprising two feet (40) having respective undersides (60) which are flat and inclined in relation to one another.

2. Press (110-610) according to the preceding claim, wherein the inductors form at least one sequence in a circumferential direction (45) with respect to an axis (X) of the mould and the inclination forms an angle α such that

$$\alpha=180°-180°/N$$

where N denotes the number of inductors (30) in the sequence.

3. Press (110-610) according to at least any one of the preceding claims, wherein the inductors form at least one sequence in a circumferential direction (45) with respect to an axis (X) of the mould and the press comprises a power circuit for supplying current to coils of the inductors in the sequence, such that, at any one given moment, the north pole of each coil (32) follows a south pole of a coil that precedes immediately in the sequence.

4. Press (210) according to the preceding claim, comprising at least two groups of coils (32), the coils of one of the groups being arranged above the coils of the other group, the power circuit being such that, at any one given moment, the north poles of the coils of the groups are arranged one above the other.

5. Press (310) according to Claim 3, comprising at least two groups of coils (32), the coils of a first of the groups being arranged above the coils of a second of the groups, the power circuit being such that, at any one given moment, the north poles of the coils of the first group are above the south poles of the coils of the second group.

6. Press (110-610) according to at least any one of Claims 3 to 5, wherein the coils (32) in the sequence form two separate sub-groups supplied with current in accordance with a connection in parallel, the coils belonging for example alternately to the first and second sub-groups if the sequence is considered in the circumferential direction.

7. Press (410-610) according to at least any one of the preceding claims, comprising a hooping ring (462), which is uninterrupted in the circumferential direction around an axis of the mould and forms an outer face of the press.

8. Press (110-310) according to at least any one of the preceding claims, wherein the mould (14, 16) is a self-locking mould.

9. Method for producing a tyre, **characterized in that** a tyre blank (12) is cured in a press (110-610) according to at least any one of Claims 1 to 8.

10. Method according to the preceding claim, wherein the coils (32) of the inductors are supplied a current having a frequency between 5 and 200 Hz.

**Fig. 1**

**Fig. 2**

**Fig. 3**

**Fig. 4**

**Fig. 5**

**Fig. 6**

**Fig. 7**

**Fig. 8**

**Fig. 9**

30 — 30 —

N | S | N | S

N | S | N | S

30 — — 30

**Fig. 10**

— 210

— 16

30 — 30 —

**Fig. 11**

— 310

N | S | N | S

16 — S | N | S | N

30 — — 30

34

38

— 36

40 —

α

a

60 — — 60

b

**Fig. 12**

38

40 —

36

40

36

16 — B

α

βα

36 — 60 β C

36 — 16

36

60

γ' γ

X

A D

**Fig. 13**

**Fig. 14**

16

410

36

30

30

36

462

464

30

410

16

36

X

30

464

36

D

**Fig. 15**

462

B

M

464

60

40

36

**Fig. 16**

**Fig. 17**

**Fig. 18**

**Fig. 19**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4599061 A
- JP 2001001342 A

- FR 2908069